# EUROPÄISCHE PATENTSCHRIFT

(11) **EP 1 721 056 B1**
(45) Veröffentlichungstag und Bekanntmachung des Hinweises auf die Patenterteilung: **18.02.2009**
(21) Anmeldenummer: 05707591.3
(22) Anmeldetag: 23.02.2005
(51) Int. Cl.: E05D 15/06, F16B 11/00

(54) **KLEBEKONSTRUKTION**
GLUING CONSTRUCTION
SYSTEME ADHESIF

(30) Priorität: 26.02.2004 DE 102004009880
(43) Veröffentlichungstag der Anmeldung: 15.11.2006
(73) Patentinhaber: DORMA GMBH & CO. KG, 58256 Ennepetal (DE)
(72) Erfinder: VOGLER, Thomas, 32105 Bad Salzuflen (DE)
(86) Internationale Anmeldenummer: PCT/EP2005/001877
(87) Internationale Veröffentlichungsnummer: WO 2005/083215

(56) Entgegenhaltungen:
- EP-A- 0 707 153
- DE-A1- 19 733 381
- US-A- 6 136 427

## Beschreibung

Die Erfindung betrifft eine Klebekonstruktion zur Aufhängung von Bauteilen an einen Rollenwagen einer Schiebetür, mit der Bauteile durch eine Verklebung miteinander verbunden werden, gemäß Anspruch 1, sowie eine Schiebetür nach Anspruch 7.

Derartige Klebekonstruktionen müssen eine ausreichende Redundanz besitzen, dies bedeutet, ein Versagen der Klebeverbindung darf nicht zum Versagen der Gesamtkonstruktion führen. Viele Klebstoffe zeichnen sich durch eine hohe Festigkeit aus, sind jedoch sehr empfindlich gegenüber dem umgebenden Medium. Bekannte Verklebungen können altern und somit brechen, d. h. die Klebung versagt, so dass sich die Bauteile lösen können und aus der Konstruktion herausfallen. Wenn es sich bei dem Bauteil z. B. um eine Glasscheibe handelt, kann diese beim Herausfallen aus der Klebekonstruktion zerstört werden.

Die US 6,136,427 zeigt eine Klebeverbindung, bei der eine Glasscheibe teilweise mit einer Membran verklebt ist, wobei die Membran über zwei verschiedene Kleber an der Glasscheibe befestigt ist.

Die DE 19733381 A1 zeigt Isolierglasscheiben, an die Distanzelemente und Funktionselemente mittels Klebung befestigt werden.

Es ist daher Aufgabe der vorliegenden Erfindung, eine Klebekonstruktion der im Oberbegriff des Anspruches 1 angegebenen Art zu schaffen, die es möglich macht, beim Versagen der Klebung eine Zerstörung oder Beschädigung der verklebten Bauteile zu vermeiden.

Weiterhin ist es Aufgabe der Erfindung, eine Schiebetür zu schaffen, bei der mittels einer Klebverbindung ein Bauteil am Rollenwagen sicher befestigt werden kann.

Die Lösung dieser Aufgaben erfolgt durch die Merkmale des Anspruches 1 und 7.

Gegenüber bekannten Klebekonstruktionen ergibt sich erfindungsgemäß der Vorteil, dass durch eine Sekundärklebung ein Versagen der Gesamtkonstruktion (Redundanz) verhindert wird. Sollte im Laufe des Nutzungszeitraumes die Primärklebung versagen, erfolgt eine Umlagerung der Beanspruchungen auf die Sekundärklebung. Auf diese Weise erfüllt die Sekundärklebung die geforderte Redundanz der Konstruktion.

Die Unteransprüche haben vorteilhafte Weiterbildungen der Erfindung zum Inhalt.

Eine Ausführungsform der Erfindung wird anhand der Zeichnungen nachfolgend erläutert.

Es zeigen:
- Figur 1:: Eine Schnittdarstellung einer Klebekonstruktion nach dem Stand der Technik und
- Figur 2:: eine vereinfachte Schnittdarstellung einer Ausführungsform einer erfindungsgemäßen Klebekonstruktion in Verbindung mit einer Schiebetür.

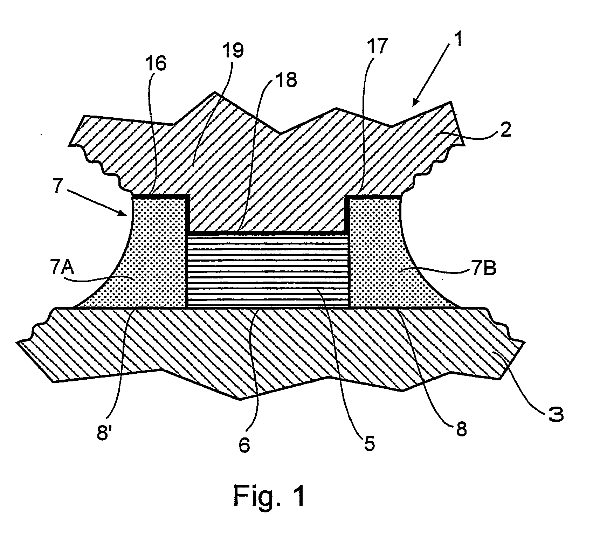

Gemäß Figur 1 ist eine Klebekonstruktion 1 dargestellt, die mit einer Primärklebung 5 und einer Sekundärklebung 7 versehen ist. Aus der Figur 1 ist ersichtlich, dass die Sekundärklebung 7 zwei Klebebereiche 7A und 7B aufweist. Die Schnittdarstellung verdeutlicht hierbei, dass die Primärklebung 5 durch die Sekundärklebung 7 entlastet und gekapselt wird. Das bedeutet, dass die Sekundärklebung 7 hier als Schutz der Primärklebung 5 wirkt. Damit erfüllt die Sekundärklebung 7 neben der Redundanz zusätzlich die Aufgabe, die Primärklebung 5 vor umgebenden Medien (z. B. Luft und/oder Wasser) zu schützen. Die Primärklebung 5 ist über eine Klebefläche 6 und die Bereiche der Sekundärklebung 7A, 7B sind über Klebeflächen 8, 8' am Bauteil 3 aufbringbar. Auf der gegenüberliegenden Seite ist die Primärklebung 5 an einer Klebefläche 18 und die Sekundärklebung 7A, 7B an Klebeflächen 16, 17 einer Grundstruktur 2 aufbringbar. Die Primärklebung 5 grenzt an die Bereiche der Sekundärklebung 7A, 7B an und ergibt somit den Vorteil der Kapselung. Die Fläche 18 ist hierbei, wie Figur 1 verdeutlicht, an einem vorspringenden Absatz 19 der Grundstruktur 2 angeordnet.

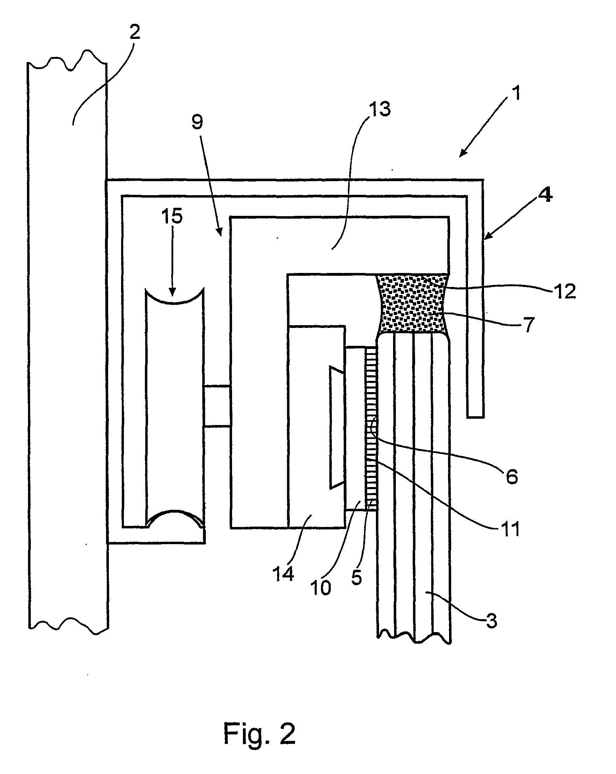

Gemäß Figur 2 ist die Ausführungsform der Klebekonstruktion 1 mit einem an einer Grundstruktur 2 (z. B. einer Wand) zu montierenden Bauteil 3 dargestellt. Die Darstellung veranschaulicht, dass auf das zu montierende Bauteil 3, insbesondere in Form eines Glaselementes, an ei-ner ersten Klebestelle 6 die Primärklebung 5 aufgebracht ist, die einen Klebstoff mit hohem E-Modul und hoher Festigkeit aufweist. Die erfindungsgemäße Sekundärklebung 7, die an einer zweiten Klebestelle 8 auf das Bauteil 3 aufbringbar ist, weist einen elastisch dehnbaren Klebstoff (z. B. Silikon) auf.

Weiterhin weist die Klebekonstruktion 1 ein an der Grundstruktur 2 fixierbares Montageprofil 4 auf, das an dem Bauteil 3 anbringbar ist.

Figur 2 verdeutlicht ferner, dass zwischen Montageprofil 4 und Bauteil 3 ein Rollenwagen 9 platzierbar und dass zwischen dem Rollenwagen 9 und dem Bauteil 3 ein Applikationsadapter 10 angeordnet ist. Der Adapter 10 weist eine erste Gegenfläche 11 für die Primärklebung 5 auf, so dass er unter Berücksichtigung der klebtechnischen Anforderungen z. B. mit dem Glaselement (Bauteil 3) verklebt werden kann.

Ferner weist die Klebekonstruktion 1 die Sekundärklebung 7 auf, die mit einer zweiten Gegenfläche 12 zusammenwirkt, die am Rollenwagen 9 angeordnet ist. Der Rollenwagen 9 weist eine Laufrollenanordnung 15 und einen Grundkörper 13 auf, an dem eine Aufnahme 14 und ein Applikationsadapter 10 angeordnet ist. Der Adapter 10 erlaubt durch den Anschluss der Applikationsaufnahme 14 eine Einstellung in allen Richtungen des Raumes. Da der Adapter 10 so konstruiert ist, dass er in seiner Dicke so klein wie möglich ist, bleibt das Glas weiterhin gut stapelbar für den Transport. Somit entfällt eine Glasbearbeitung und die Tragfähigkeit bleibt erhalten.

Aus Figur 2 ergibt sich ferner, dass der Grundkörper 13 eine Gegenfläche 12 für die Sekundärklebung 7 aufweist.

### Bezugszeichenliste

- 1: Klebekonstruktion
- 2: Grundstruktur
- 3: Bauteil
- 4: Montageprofil
- 5: Primärklebung
- 6: erste Klebestelle
- 7: Sekundärklebung
- 7A, 7B: Klebebereich
- 8, 8': zweite Klebestelle
- 9: Rollenwagen
- 10: Applikationsadapter
- 11: erste Gegenfläche
- 12: zweite Gegenfläche
- 13: Grundkörper
- 14: Applikationsaufnahme
- 15: Laufrollenanordnung
- 16, 17, 18: Klebeflächen
- 19: Absatz

## Patentansprüche

1. Klebekonstruktion (1) zur Aufhängung von Bauteilen (3) an einen Rollenwagen (9) einer Schiebetür, wobei der Rollenwagen (9) im Wesentlichen einen Grundkörper (13) und eine Laufrollenanordnung (15) umfasst, **dadurch gekennzeichnet, dass** zwischen dem Rollenwagen (9) und dem Bauteil (3) ein Applikationsadapter (10) angeordnet ist, der eine erste Gegenfläche (11) für eine Primärklebung (5) aufweist, und dass das Bauteil (3) über eine Primärklebung (5) mit einem Klebstoff hoher Festigkeit an der ersten Gegenfläche (11) befestigt ist und über eine Sekundärklebung (7) mit einem elastisch dehnbaren Klebstoff an dem Grundkörper (13) befestigt ist.

2. Klebekonstruktion (1) nach Anspruch 1, **dadurch gekennzeichnet, dass** der Rollenwagen (9) an einem Montageprofil (4) angeordnet ist, das an einer Grundstruktur (2) befestigt ist.

3. Klebekonstruktion nach Anspruch 1, **dadurch gekennzeichnet, dass** die Sekundärklebung (7) mit einer zweiten Gegenfläche (12) zusammenwirkt, die am Rollenwagen (9) angeordnet ist.

4. Klebekonstruktion nach einem der Ansprüche 3 bis 5, **dadurch gekennzeichnet, dass** der Rollenwagen (9) eine Laufrollenanordnung (15) und einen Grundkörper (13) aufweist, der eine Aufnahme (14) für den Applikationsadapter (10) aufweist.

5. Klebekonstruktion nach Anspruch 3, **dadurch gekennzeichnet, dass** die Gegenfläche (12) am Grundkörper (13) angeordnet ist.

6. Klebekonstruktion nach einem der vorhergehenden Ansprüche, **dadurch gekennzeichnet, dass** das Bauteil (3) ein Glaselement ist.

7. Schiebetür mit einem entlang eines Montageprofiles (4) verschiebbar angeordneten Rollenwagen (9), an den Bauteile (3) mittels einer Klebekonstruktion (1) aufgehängt sind, wobei der Rollenwagen (9) im Wesentlichen einen Grundkörper (13) und eine Laufrollenanordnung (15) umfasst, **dadurch gekennzeichnet, dass** zwischen dem Rollenwagen (9) und dem Bauteil (3) ein Applikationsadapter (10) angeordnet ist, der eine erste Gegenfläche (11) für eine Primärklebung (5) aufweist, und dass das Bauteil (3) über eine Primärklebung (5) mit einem Klebstoff hoher Festigkeit an der ersten Gegenfläche (11) befestigt ist und über eine Sekundärklebung (7) mit einem elastisch dehnbaren Klebstoff an einem Grundkörper (13) befestigt ist.

8. Schiebetür nach Anspruch 7, **dadurch gekennzeichnet, dass** der Rollenwagen (9) an einem Montageprofil (4) angeordnet ist, das an einer Grundstruktur (2) befestigt ist.

9. Schiebetür nach Anspruch 7, **dadurch gekennzeichnet, dass** die Sekundärklebung (7) mit einer zweiten Gegenfläche (12) zusammenwirkt, die am Rollenwagen (9) angeordnet ist.

10. Schiebetür nach einem der Ansprüche 7 bis 9, **dadurch gekennzeichnet, dass** der Rollenwagen (9) eine Laufrollenanordnung (15) und einen Grundkörper (13) aufweist, der eine Aufnahme (14) für den Applikationsadapter (10) aufweist.

11. Schiebetür nach Anspruch 9, **dadurch gekennzeichnet, dass** die Gegenfläche (12) am Grundkörper (13) angeordnet ist.

12. Schiebetür nach einem der Ansprüche 7 bis 11, **dadurch gekennzeichnet, dass** das Bauteil (3) ein Glaselement ist.

## Claims

1. An adhesive system (1) for suspending structural components (3) from a roller carriage (9) of a sliding door, the roller carriage (9) basically comprising a base body (13) and a roller assembly (15), **characterized in that** an application adapter (10) is disposed between the roller carriage (9) and the structural component (3), which adapter has a first mating surface (11) for a primary bonding (5), and **in that** the structural component (3) is fastened to the first mating surface (11) via a primary bonding (5) by means of an adhesive of high strength and via a secondary bonding (7) to the base body (13) by means of an elastically stretchable adhesive.

2. An adhesive system (1) according to claim 1, **characterized in that** the roller carriage (9) is disposed at a mounting profile (4) which is attached at a base structure (2).

3. An adhesive system according to claim 1, **characterized in that** the secondary bonding (7) cooperates with a second mating surface (12), which is disposed at the roller carriage (9).

4. An adhesive system according to any of the claims 1 to 3, **characterized in that** the roller carriage (9) has a roller assembly (15) and a base body (13), which has a reception (14) for the application adapter (10).

5. An adhesive system according to claim 3, **characterized in that** the mating surface (12) is disposed at the base body (13).

6. An adhesive system according to any of the preceding claims, **characterized in that** the structural component (3) is a glass element.

7. A sliding door having a roller carriage (9), which is disposed displaceable along a mounting profile (4), structural components (3) being suspended from said carriage by means of an adhesive system (1), the roller carriage (9) basically comprising a base body (13) and a roller assembly (15), **characterized in that** an application adapter (10), which comprises a first mating surface (11) for a primary bonding (5), is disposed between the roller carriage (9) and the structural component (3), and **in that** the structural component (3) is fastened to the first mating surface (11) via a primary bonding (5) by means of an adhesive of high strength and is fastened to a base body (13) by means of a secondary bonding (7) with an elastically stretchable adhesive.

8. A sliding door according to claim 7, **characterized in that** the roller carriage (9) is disposed at a mounting profile (4), which is attached at a base structure (2).

9. A sliding door according to claim 7, **characterized in that** the secondary bonding (7) cooperates with a second mating surface (12), which is disposed at the roller carriage (9).

10. A sliding door according to one of the claims 7 to 9, **characterized in that** the roller carriage (9) has a roller assembly (15) and a base body (13), which has a reception (14) for the application adapter (10).

11. A sliding door according to claim 9, **characterized in that** the mating surface (12) is disposed at the base body (13).

12. A sliding door according to one of the claims 7 to 11, **characterized in that** the structural component (3) is a glass element.

## Revendications

1. Système adhésif (1) pour la suspension d'éléments de construction (3) à un chariot à galets (9) d'une porte coulissante, le chariot à galets (9) comprenant essentiellement un corps de base (13) et un arrangement de galets roulants (15), **caractérisé en ce qu'**un adaptateur d'application (10), qui présente une première contre-face (11) pour un collage primaire (5), est agencé entre le chariot à galets (9) et l'élément de construction (3), et **en ce que** l'élément de construction (3) est fixé à la première contre-face (11) par un collage primaire (5) avec un adhésif de grande résistance mécanique et au corps de base (13) par un collage secondaire (7) avec un adhésif qui est élastiquement extensible.

2. Système adhésif (1) selon la revendication 1, **caractérisé en ce que** le chariot à galets (9) est agencé sur un profilé de montage (4) qui est fixé à une structure de base (2).

3. Système adhésif (1) selon la revendication 1, **caractérisé en ce que** le collage secondaire (7) coopère avec une deuxième contre-face (12) qui est agencé sur le chariot à galets (9).

4. Système adhésif selon l'une des revendications 1 à 3, **caractérisé en ce que** le chariot à galets (9) présente un arrangement de galets roulants (15) et un corps de base (13) qui présente une réception (14) pour l'adaptateur d'application (10).

5. Système adhésif selon la revendication 3,
**caractérisé en ce que** la contre-face (12) est agencée sur le corps de base (13).

6. Système adhésif selon l'une des revendications précédentes, **caractérisé en ce que** l'élément de construction (3) est un élément en verre.

7. Porte coulissante avec un chariot à galets (9) qui est disposé de façon déplaçable lelong d'un profilé de montage (4) et auquel des éléments de construction (3) sont suspendus au moyen d'un système adhésif (1), le chariot à galets (9) comprenant essentiellement un corps de base (13) et un arrangement de galets roulants (15), **caractérisée en ce qu'**un adaptateur d'application (10), qui présente une première contre-face (11) pour un collage primaire (5), est agencé entre le chariot à galets (9) et l'élément de construction (3), et **en ce que** l'élément de construction (3) est fixé à la première contre-face (11) par un collage primaire (5) avec un adhésif de grande résistance mécanique et à un corps de base (13) par un collage secondaire (7) avec un adhésif qui est élastiquement extensible.

8. Porte coulissante selon la revendication 7, **caractérisée en ce que** le chariot à galets (9) est agencé sur un profilé de montage (4) qui est fixé à une structure de base (2).

9. Porte coulissante selon la revendication 7, **caractérisée en ce que** le collage secondaire (7) coopère avec une deuxième contre-face (12) qui est agencée sur le chariot à galets (9).

10. Porte coulissante selon l'une des revendications 7 à 9, **caractérisée en ce que** le chariot à galets (9) présente un arrangement de galets roulants (15) et un corps de base (13), qui présente une réception (14) pour l'adaptateur d'application (10).

11. Porte coulissante selon la revendication 9, **caractérisée en ce que** la contre-face (12) est agencée sur le corps de base (13).

12. Porte coulissante selon l'une des revendications 7 à 11, **caractérisée en ce que** l'élément de construction (3) est un panneau en verre.
